(19) **Europäisches Patentamt**
**European Patent Office**
**Office européen des brevets**

(11) **EP 1 894 291 B1**

(12) **EUROPEAN PATENT SPECIFICATION**

(45) Date of publication and mention
of the grant of the patent:
**19.08.2009 Bulletin 2009/34**

(51) Int Cl.:
**H02M 3/335** (2006.01)

(21) Application number: **06756053.2**

(86) International application number:
**PCT/IB2006/051778**

(22) Date of filing: **02.06.2006**

(87) International publication number:
**WO 2006/131870 (14.12.2006 Gazette 2006/50)**

(54) **METHOD FOR OPERATING A POWER CONVERTER IN A SOFT-SWITCHING RANGE AND POWER CONVERTER ADAPTED TO SAID METHOD**

VERFAHREN ZUM BETREIBEN EINES LEISTUNGSWANDLERS IM SANFTSCHALTENDEN BEREICH UND VORRICHTUNG ZUR AUSFÜHRUNG DESSELBEN VERFAHRENS

PROCEDE DE FONCTIONNEMENT D'UN CONVERTISSEUR DE PUISSANCE DANS UNE FOURCHETTE DE COMMUTATION DOUCE ET CONVERTISSEUR ADAPTE POUR CE PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.06.2005 EP 05105091**

(43) Date of publication of application:
**05.03.2008 Bulletin 2008/10**

(73) Proprietor: **Koninklijke Philips Electronics N.V.**
**5621 BA Eindhoven (NL)**

(72) Inventors:
• **TAO, Haimin**
**NL-5656 AA Eindhoven (NL)**
• **KOTSOPOULOS, Andrew**
**NL-5656 AA Eindhoven (NL)**
• **DUARTE, Jorge, L.**
**NL-5656 AA Eindhoven (NL)**

• **HENDRIX, Machiel, A., M.**
**NL-5656 AA Eindhoven (NL)**

(74) Representative: **Bekkers, Joost J.J**
**Philips**
**Intellectual Property & Standards**
**P.O. Box 220**
**5600 AE Eindhoven (NL)**

(56) References cited:
**WO-A-03/065559      US-A- 5 027 264**
**US-A- 5 500 791**

• **MICHON M ET AL: "A three-port bi-directional converter for hybrid fuel cell systems" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20 June 2004 (2004-06-20), pages 4736-4742, XP010739164 ISBN: 0-7803-8399-0**

**Description**

The present invention relates to a method for operating a power converter in a soft-switching range and to a power converter configured to operate in a soft-switching range.

Power converters are known in the art for supplying a power from a power source to a load, wherein certain characteristics of the power source are not compatible with certain characteristics of the load, such as a nominal voltage and an operating voltage, respectively.

For DC/DC conversion, a dual-active-bridge (DAB) converter is known. The DAB-converter converts a DC voltage of a power source coupled to a first port to an AC voltage using a first active bridge. The AC voltage is transferred to a second active bridge using an electromagnetic coupling device, such as a transformer. The second active bridge converts the AC voltage to a DC voltage. The DC voltage is supplied to a second port of the power converter. Thus, the power converter may provide power from the power source to a load coupled to the second port.

Patent publication WO 03/065559 discloses an apparatus for converting direct voltage of a first input side into direct voltage of a second output side. The apparatus has a first converter located on the input side, a second converter located on the output side and a transformer arranged therebetween. A unit is adapted to control semiconductor devices of turn-off type of the converters to vary the duty cycle of the voltage delivered on the alternating voltage side of the respective converter for controlling the appearance of the current through an inductance associated with the transformer.

The publication "A three-port bi-directional converter for hybrid fuel cell systems" of M. Michone discloses a DC/AC/DC converter provided with a three-winding transformer and bi-directional high-frequency switching bridges.

Patent US5027264 discloses a DC/DC power converter comprising input and output converters which are switched in a soft-switch manner to minimize switching losses and increase switching frequency.

Further, a triple-active-bridge (TAB) converter is known. The TAB-converter comprises a third bridge coupled to a third port in addition to the first active bridge coupled to the first port and the second active bridge coupled to the second port mentioned above. An energy buffer may be coupled to the third port for energy storage.

The TAB-converter is in particular suitable for a combination of a power source which is suitable for providing a constant power, i.e. has a slow transient response, and a load that may consume a relatively fast varying power. When the load consumes less power than provided by the power source, the energy buffer stores the remaining power, and when the load consumes more power than provided by the power source, the energy buffer provides the additional power needed.

It is noted that transformer-coupled multi-port converters, i.e. converters having more than the three ports and respective bridges for the power source, the load and the energy buffer, are also known in the art. The further ports may be coupled to further loads, power sources or energy buffers.

In the DAB and TAB converters, each bridge couples a phase-shifted high frequency square-wave voltage on a winding of the transformer to a voltage on a respective port. With soft switching of the switches of each bridge, i.e. zero-voltage-switching (ZVS) and/or zero-current-switching (ZCS), the efficiency of a converter can be improved compared to hard switching and a higher switching frequency is possible. However, the known converters are not configured to wide voltage variations at a port while maintaining soft switching, and thus they are not suitable for wide voltage-input range applications, such as capacitors for energy buffering.

In order to extend the soft-switching operating range, a few methods have been proposed such as voltage cancellation. However, for the DAB and TAB converter structures described above, the voltage cancellation method is complex to implement, e.g. due to the use of a look-up table.

It is desirable to provide a method for extending the soft-switching range which method is simple, cost-effective and easy to implement.

The method according to the present invention as described in claim 1 provides a method for operating a power converter, wherein a soft-switching range is extended.

In a DAB-converter used to couple two devices of which at least one has a dynamically changing voltage in a relatively wide range, a half-cycle voltage-time integral of a positive (or negative) part of a rectangular-pulse-wave on the winding of the transformer coupled to said device having a dynamically changing voltage is controlled to equal a half-cycle voltage-time integral of a positive (or negative) part of a rectangular-pulse-wave on the second winding. The half-cycle voltage-time integral is defined as the time integral of a half-cycle of the winding voltage. For a rectangular-pulse-wave voltage the integral simplifies to the product of pulse duty cycle and amplitude. It is noted that the actual voltages are compensated for the turns ratio of the windings. It may be shown that controlling the duty cycle of the voltage in order to keep the volt-seconds products of the windings equal extends the soft-switching range.

In a TAB-converter used to couple a power source having a slow transient response, a load and an energy buffer that has a widely varying voltage, such as a capacitor, it is advantageous to control the duty cycle of the voltage of the winding coupled to the capacitor. Moreover, it may be shown that in such a configuration the soft switching range is extended to the entire operating range.

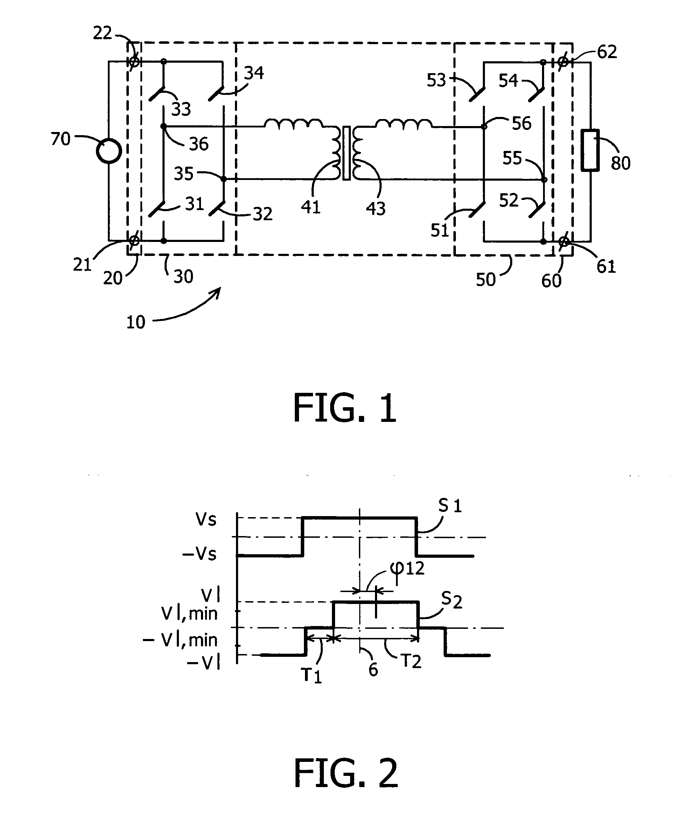

The controllable switches of the bridge circuits generate a rectangular-pulse-wave voltage, which rectangular-pulse-wave voltage is applied to the winding of the transformer coupled to said bridge circuit. The rectangular-pulse-wave has a duty cycle and a phase. The duty cycle of the voltage as used herein indicates a period during which the rectangular-pulse-wave voltage is non-zero relative to the period of a half cycle of the rectangular-pulse-wave voltage. Thus, if the voltage is high during the whole half cycle, the duty cycle is 1; if the voltage is zero during the whole half cycle, the duty cycle is 0. The duty cycle is further explained hereinafter in relation to Fig. 2.

The phase of the rectangular-pulse-wave voltage is relevant with respect to the phase of the rectangular-pulse-wave voltage applied to other windings of the transformer. A phase shift between said voltages determines an amount of power transfer, as is known in the art.

In an embodiment a load phase shift is determined as a phase shift between the phase of the rectangular-pulse-wave voltage coupled to the power source and the phase of the rectangular-pulse-wave voltage coupled to the load. Further, a buffer phase shift is determined as a phase shift between the phase of the rectangular-pulse-wave voltage coupled to the power source and the phase of the rectangular-pulse-wave voltage coupled to the energy buffer. The load phase shift and the buffer phase shift may be determined and controlled such that the power transfer in the power converter is such that the power drawn from the power source is substantially constant. Drawing a substantially constant power may be preferred due to a relatively slow transient response of the power source, for example.

In order to achieve soft switching in the above indicated embodiment, at least a duty cycle of the rectangular-pulse-wave voltage on the winding coupled to the energy buffer, hereinafter referred to as a buffer duty cycle, is determined and controlled such that the half-cycle voltage-time integral of the positive (or negative) part of the rectangular-pulse-wave on the winding substantially equals the half-cycle voltage-time integral of the positive (or negative) part of a rectangular-pulse-wave on the other windings of the transformer. As indicated above, the half-cycle voltage-time integral may be a product of the peak voltage and the duty cycle as will be elucidated hereinafter with respect to the drawings.

In an embodiment, wherein the power source has a relatively wide DC voltage range depending on the amount of power drawn from it, such as a fuel cell, the power source may be operated at different power levels using duty cycle control at the source side of the power converter. Thereto, a source duty cycle of a voltage on a winding coupled to the power source is determined such that a half-cycle voltage-time integral of the positive (or negative) part of said voltage on said winding substantially equals a half-cycle voltage-time integral of the positive (or negative) part of said voltage on another winding, for example a winding coupled to the load.

If a load voltage, i.e. a voltage over the load, is to be substantially constant, e.g. equal to a constant operating voltage of the load, the load phase shift determining the amount of power supplied to the load may be controlled in response to said load voltage. When the load attempts to change its power consumption, it needs to change its resistance. Therefore, the load voltage and a corresponding load current will both change at first, since the supplied power does not change. Comparing the actual load voltage with a predefined desired load voltage, e.g. the operating voltage of the load, determines a load voltage difference. In response to said load voltage difference a changed load phase shift may be determined. For example, if the load attempts to draw a higher power, the actual load voltage deviates from the predefined desired load voltage as long as a corresponding higher power is not supplied by the power converter. In response to the change of the load voltage, the power converter is controlled to change the load phase shift to supply more power until the actual load voltage is substantially equal to the predefined desired load voltage again.

In an embodiment, the load may have a varying operating voltage depending on its power consumption. In such an embodiment, duty cycle control according to the present invention may be employed on the rectangular-pulse-wave voltage on the winding of the transformer coupled to the load in order to compensate for the resulting half-cycle voltage-time integral change on the winding, thereby maintaining soft switching in the power converter.

In an embodiment the buffer phase shift is determined based on a power difference between an actual source power drawn from the power source and a predefined desired source power. The predefined desired source power may represent a nominal power of the power source, or may be a user-selected operating power. The power difference between the power drawn and the desired power is a measure for the power to be supplied or to be drawn by the energy buffer. The buffer phase shift is thus used to control the power transfer to or from the energy buffer, while controlling the power drawn from the power source to be substantially constant.

In an embodiment the method comprises controlling the predefined desired source power. When the capacitor is charged above a predefined maximum level, or when the capacitor is discharged below a minimum level, the predefined desired source power may be changed in order to discharge or to charge, respectively, the capacitor. Depending on the power capacity of the power source, the change may be temporary. Analogously, if the load consumes more or less power over a longer period of time, and if the power source is suitable for supplying power at another power level, the predefined desired source power may be changed for a longer period of time.

When starting operation of the power converter, over-current may be observed due to a low voltage at the load side and/ or buffer side of the power converter. A simple solution is to control the duty cycle of the power source bridge during start-up. Meanwhile, the load bridge and the buffer bridge are uncontrolled and operate as rectifiers. By increasing the duty cycle gradually with open-loop control, a load side capacitor and/or the buffer can be slowly charged to a certain voltage level. Then the closed-loop control may take over to regulate the output voltage.

In an embodiment the drawback of over current at start-up is overcome by controlling the bridges to operate at a relatively high frequency. Due to the high frequency, less power can be transferred, thereby limiting the current. Again, as soon as a certain voltage level is reached, the frequency may be lowered, possibly gradually, to a predetermined operating frequency.

In an aspect of the present invention, a power converter configured to operate according to the method of the present invention is provided.

Hereinafter, the method and the power converter according to the present invention are elucidated, and further aspects, features and advantages thereof are described, with reference to the appended drawings, wherein

Fig. 1 illustrates a dual-active-bridge power converter;

Fig. 2 illustrates rectangular-pulse-wave voltages applied to the windings of the transformer of the dual-active-bridge power converter of Fig. 1 operated according to the present invention;

Fig. 3 shows a triple-active-bridge power converter;

Fig. 4 illustrates a set of rectangular-pulse-wave voltages applied to the windings of the transformer of the triple-active-bridge power converter of Fig. 3 operated according to the present invention;

Fig. 5 shows a control scheme for operating a power converter in accordance with a method of the present invention;

Figs. 6a - 6b show graphs of a simulation of operating a power converter using a conventional method and using a method according to the present invention; and

Figs. 7a - 7c show graphs of an experiment of operating a power converter using a method according to the present invention.

Fig. 1 shows an embodiment of a dual-active-bridge power converter 10 according to the present invention. The power converter 10 comprises a first port 20 comprising port terminals 21 and 22, a first bridge circuit 30 comprising switches 31-34 and nodes 35, 36. A transformer 40 of the power converter 10 comprises a first winding 41 with a first number of turns $N_1$ and a second winding 43 with a second number of turns $N_2$. The power converter 10 further comprises a second bridge circuit 50 comprising switches 51-54 and nodes 55, 56 and a second port 60 comprising port terminals 61 and 62.

A power source 70 may be coupled to the port terminals 21 and 22. In operation, a source voltage $V_s$ may be applied to the port terminals 21 and 22. A load 80 may be coupled to the port terminals 61 and 62. In operation, a load voltage $V_1$ may be present between the port terminals 61 and 62. Further, in operation, a first rectangular-pulse-wave voltage $V_{w1}$ may be present between the nodes 35 and 36, i.e. over the first winding 41 of the transformer 40, and a second rectangular-pulse-wave voltage $V_{w2}$ may be present between nodes 55 and 56, i.e. over the second winding 43 of the transformer 40.

Fig. 2 shows a rectangular-pulse-wave voltage signal $S_1$ with a first duty cycle $D_1$ and a rectangular-pulse-wave voltage signal $S_2$ with a second duty cycle $D_2$. A phase shift $\varphi_{12}$ between the rectangular-pulse-wave voltage signal S1 and rectangular-pulse-wave voltage signal $S_2$ is shown as well as a reference line 6. Further, time periods $T_1$ and $T_2$ are indicated as well as a source voltage level $V_s$, a load voltage level $V_1$ and a minimum operating load voltage $V_{1,mm}$.

The voltage signal $S_1$ is a square-wave voltage having two voltage levels $V_s$ and $-V_s$. Thus, the period during which the voltage signal $S_1$ is at a level $V_s$ (or $-V_s$) is a half cycle of the square-wave signal. According to the definition of duty cycle as used herein, i.e. the period of the half cycle during which the voltage signal is non-zero (thus equals $V_s$ or $-V_s$) over the half cycle period, the duty cycle $D_1$ is 1. The duty cycle $D_2$ of the voltage signal $S_2$ equals $T_2$ over the sum of $T_1$ and $T_2$ (i.e. half cycle period):

$$D_2 = T_2 \,/\, (T_1 + T_2). \tag{1}$$

Now referring to Fig. 1 and Fig. 2, it is assumed that the source voltage $V_s$ is substantially constant, e.g. because the power source 70 has a slow transient response. The load voltage $V_1$ may change dynamically over a relatively wide range. The transformer turns ratio $N_1/N_2$ is designed according to a minimum operating voltage $V_{1,min}$ of the load 80:

$$N_1 \,/\, N_2 = V_s \,/\, V_{1,min}. \tag{2}$$

The duty cycles $D_1$ and $D_2$ may be adjusted according to an actual voltage on the ports 20 and 60. With a substantially constant source voltage, the source duty cycle $D_1$ is designed to be 1 and the load duty cycle $D_2$ is depending on the actual load voltage $V_1$ and the minimum operating voltage $V_{1,min}$:

$$D_1 = 1; \tag{3}$$

$$D_2 = V_{l,min} / V_l. $$

If the duty cycles $D_1$, $D_2$ are controlled according to equations (3), the corresponding half-cycle voltage-time integrals of the positive (or negative) parts of the rectangular-pulse-waves applied to the transformer 40 over half the switching cycle are equal:

$$V_s * D_1 = (N_1 / N_2) * V_l * D_2 \tag{4}$$

A variation in the load voltage $V_1$ may thus be compensated by adjusting the duty cycle $D_2$ in accordance with equation (3). Controlling the dual-active-bridge power converter 10 as described above extends the soft-switching range of the power converter 10.

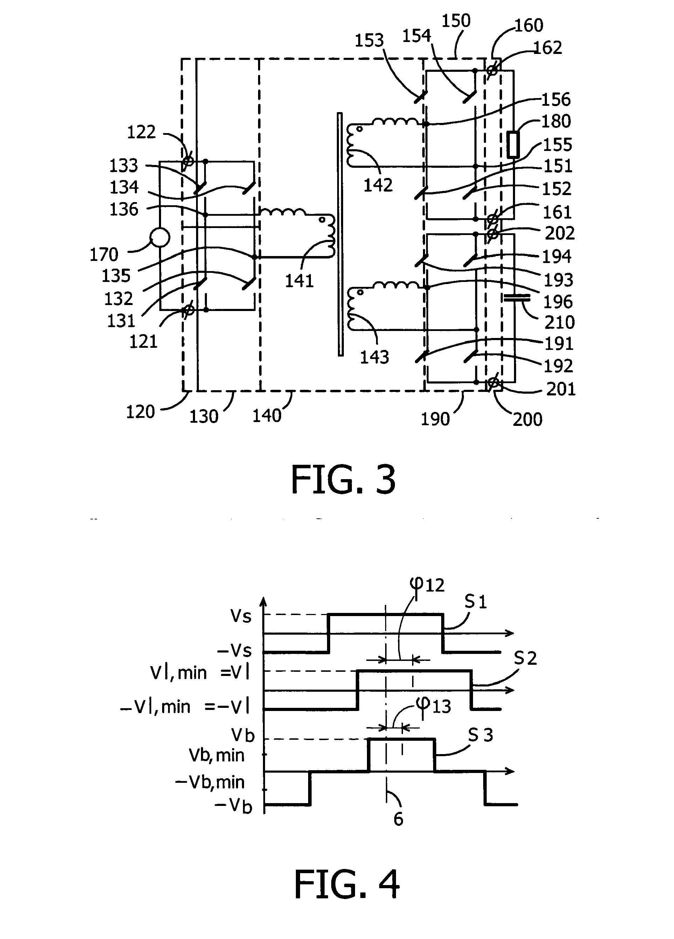

Fig. 3 illustrates an embodiment of a triple-active-bridge power converter 110 according to the invention. The power converter 110 comprises a first port 120 comprising port terminals 121 and 122, a first bridge circuit 130 comprising switches 131-134 and nodes 135, 136. A transformer 140 comprises a first winding 141 with a first number of turns $N_1$, a second winding 142 with a second number of turns $N_2$, a second bridge circuit 150 comprising switches 151-154 and nodes 155, 156 and a second port 160 comprising port terminals 161 and 162. Furthermore, the transformer 140 comprises a third winding 143 with a third number of turns N3, a third bridge circuit 190 comprising switches 191-194 and nodes 195, 196 and a third port 200 comprising connectors 201 and 202.

A power source 170 may be coupled to the port terminals 121 and 122. In operation, a source voltage $V_s$ may be applied to the port terminals 121 and 122. A load 180 may be coupled to the port terminals 161 and 162. In operation, a load voltage $V_1$ may be present between the port terminals 161 and 162. Further, in operation, a first rectangular-pulse-wave voltage $V_{w1}$ may be present between the nodes 135 and 136, i.e. over the first winding 141 of the transformer 140, and a second rectangular-pulse-wave voltage $V_{w2}$ may be present between nodes 155 and 156, i.e. over the second winding 142 of the transformer 140.

An energy buffer such as a capacitor 210 is coupled to the port terminals 201 and 202. In operation, a buffer voltage $V_b$ may be present on the port terminals 201 and 202. Between the nodes 195 and 196 a third rectangular-pulse-wave voltage $V_{w3}$ may be present.

Fig. 4 shows a source rectangular-pulse-wave voltage signal $S_1$ with a source duty cycle $D_1$, a load rectangular-pulse-wave voltage signal $S_2$ with a load duty cycle $D_2$ and a buffer rectangular-pulse-wave voltage signal $S_3$ with a buffer duty cycle $D_3$. The duty cycle is defmed as described in relation to Fig. 2. A phase shift $\varphi_{12}$ between the rectangular-pulse-wave voltage signal $S_1$ and rectangular-pulse-wave voltage signal $S_2$ and a phase shift $\varphi_{13}$ between the rectangular-pulse-wave voltage signal $S_1$ and rectangular-pulse-wave voltage signal $S_3$ are shown as well as a reference line 6. Further, a source voltage level $U_s$, a load voltage level $V_1$ and a minimum operating load voltage $V_{1,min}$ are indicated as well as a minimum buffer voltage $V_{b,min}$ and a buffer voltage $V_b$.

The source voltage signal $S_1$ is a square-wave voltage having two voltage levels $V_s$ and $-V_s$, the source duty cycle $D_1$ being 1. It is assumed that the power source 170 has a slow transient response and is therefore suitable to supply a substantially constant power.

The load duty cycle $D_2$ of the load voltage signal $S_2$ is selected to be 1, which is suitable for a load having a substantially constant operating voltage. Thus, in the exemplary embodiment of Fig. 3, it is assumed that the operating load voltage $V_1$ is substantially constant and equals $V_{1,min}$. Since the load voltage $V_1$ does not vary, duty cycle control is not needed at the load side of the power converter 110. The phase shift $\varphi_{12}$ determines an amount of power transferred to the load 180.

The energy buffer 210 is selected to be a capacitor, preferably a capacitor having a relatively large capacitance. In the art, to such capacitors may be referred as super-capacitors or ultra-capacitors. However, in a practical embodiment, other devices or arrangements, such as a bank of capacitors, may be employed as the energy buffer. An advantage of a capacitor is found in the fact that the state-of-charge is a simple function of its voltage. In general, a capacitor is a suitable device for transient energy storage. Due to the coupling between the state-of-charge and the voltage, the capacitor in the exemplary embodiment of Fig. 3 has a widely varying voltage. To overcome the problem of the varying voltage, the triple-active-bridge power converter 110 may be operated in accordance with the present invention: the energy buffer 210 may be controlled using duty cycle control.

The duty cycle control aims to keep the half-cycle voltage-time integrals of the positive (or negative) part of rectangular-pulse-waves on the windings of the transformer substantially equal. The number of turns $N_1$, $N_2$ and $N_3$ are selected such that

$$N_1 \, / \, N_2 = V_s \, / \, V_l; \text{ and}$$
$$N_1 \, / \, N_3 = V_s \, / \, V_{b,min} \qquad\qquad (5)$$

It is noted that for ease of illustration of the voltage levels indicated in Fig. 3, it is assumed that $N_1 = N_2 = N_3$. Hereinafter, this assumption is adhered to.

The buffer duty cycle $D_3$ is controlled to be

$$D_3 = V_{b,min} \, / \, V_b \qquad\qquad (6)$$

and therefore, following from equations (5) and (6) with $N_1 = N_2 = N_3$

$$V_s \ast D_1 = V_l \ast D_2 = V_b \ast D_3 \qquad\qquad (7)$$

The operating method according to the present invention controls the load phase shift $\varphi_{12}$ and the buffer phase shift $\varphi_{13}$ such that the power drawn from the power source 170 is substantially constant and that the load 180 is supplied with the power it needs. The buffer 210 stores a temporary excess-power if the load 180 consumes less power than the power drawn from the power source 170; and the buffer 210 provides a temporary additional power if the load 180 consumes more power than drawn from the power source 170.

It may be shown, for example using a primary referred simplified $\pi$-model that the control method according to the present invention achieves soft switching in an entire operating range of the power converter 110, in particular due to the duty cycle control on the ports to which devices having a varying voltage are coupled.

In the exemplary embodiment of Fig. 3, all bridges are shown as full bridges comprising four switches. However, the bridges coupled to windings on which duty cycle control is not performed, may be half-bridges comprising only two switches. Thus, in the exemplary embodiment of Fig. 3, the bridge 130 and the bridge 150 may be embodied as a half-bridge, whereas the bridge 190 needs to be a full bridge due to the duty cycle control on the rectangular-pulse-wave voltage on winding 143.

Further, in the exemplary embodiment of Fig. 4, the load operating voltage is assumed constant, i.e. is regulated to be constant and the voltage supplied by the source 170 is assumed to be constant. Due to these assumptions, no duty cycle control is needed on the ports coupled thereto. However, the power converter 110 may be designed to perform duty cycle control on said ports enabling a varying voltage at said ports. For example, if the power source 110 is a fuel cell, the power supplied by the fuel cell may be lower than a nominal power. In such a case, the voltage on the port 120 will be higher accordingly. Applying duty cycle control to the winding 141 by controlling the bridge 130 thus enables to operate the fuel cell at different power levels.

A person skilled in the art readily understands that the embodiment of Figs. 3 and 4 may be extended to power converters having more than three active bridges and ports. Controlling the power converter analogously using duty cycle control at the ports on which the voltage may vary, soft switching may be achieved in an entire operating range. In such a N-port transformer-coupled multi-active-bridge DC/DC converter, at least one output-port voltage is regulated, for example the load-port. This means that the DC voltage of this port keeps constant. Therefore, this port is always operated at square-wave mode (duty cycle = 1). Having only one voltage regulated port is the worst case; if two or more ports' voltages keep constant, switching conditions are even better. The transformer turns ratios can then be designed according to the minimum operating voltage on each port in analogy to equations (2) and (5). The duty cycles of the voltages on the windings are controlled depending on the ports' voltage in analogy to equations (3) and (6) such that a condition analogous to equations (4) and (7) is met.

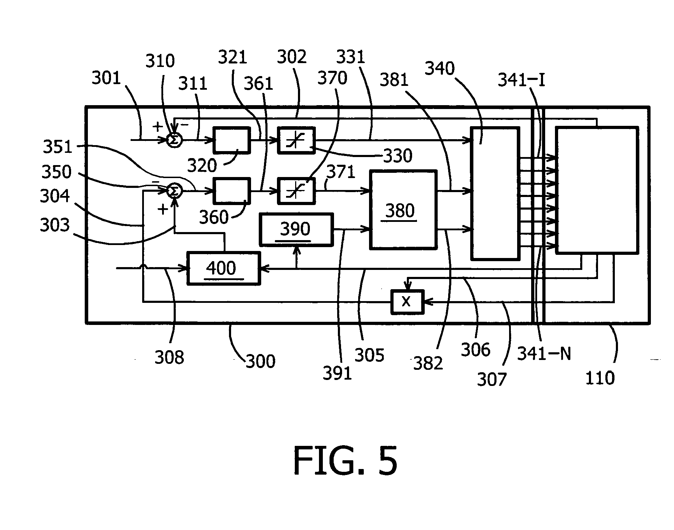

Fig. 5 shows a schematic diagram of a controller 300 for operating a power converter 110 in accordance with the present invention. The controller 300 comprises a summing device 310 to which a desired operating load voltage $V_{1,op}$ 301 and an actual load voltage V1 302 are supplied. The actual load voltage 302 is determined at the load port of the power converter 110. The summing device 310 supplies a load voltage difference signal 311 to a first proportional integrator (PI) circuit 320. The first PI circuit 320 outputs a first integrated voltage difference signal 321 to a limiting circuit 330 which supplies a limited integrated voltage difference signal 331 representing a load phase shift $\varphi_{12}$ to a suitable control circuit 340, such as a phase shift modulator.

The controller 300 further comprises a summing device 350 to which a predefined desired source power signal 303 and an actual source power 304 are supplied. The actual source power 304 is determined by multiplying an actual power source voltage 306 and an actual power source current 307, which are determined at the power source port of the power converter 110. The summing device 350 outputs a power difference signal 351 to a second proportional integrator (PI) circuit 360. The second PI circuit 360 outputs a second integrated power difference signal 361 to a limiting circuit 370 which supplies a limited integrated power difference signal 371 representing a buffer phase shift $\varphi_{13}$ to a processing unit 380. The processing unit 380 also receives a duty cycle signal 391 from a duty cycle controller 390. The duty cycle controller 390 determines a buffer duty cycle $D_3$ as a function of a buffer voltage 305 as determined at the buffer port of the power converter 110.

The processing unit 380 determines a first and a second control signal 381, 382. The first and second control signals 381, 382 are supplied to the suitable control circuit 340. As will be explained hereinafter, the processing unit 380 may be omitted or be incorporated in the control circuit 340, in which case the limited integrated signal 371 and the duty cycle signal 391 are supplied to the control circuit 340 directly.

The control circuit 340 outputs switch control signals 341-1 - 341-N, wherein N is equal to the number of switches of the bridges of the power converter 110. The switch control signals 341 are supplied to the switches of the power converter 110 in order to operate the bridges in accordance with the phase shifts $\varphi_{12}$ and $\varphi_{13}$ and the duty cycle $D_3$ determined by the controller 300.

In the exemplary embodiment of Fig. 5, the desired source power 303 may be controlled by an SOC-controller 400 in response to a state-of-charge (SOC) of the buffer coupled to the power converter 110. Thereto, the SOC-controller 400 is supplied with the actual buffer voltage 305 indicating a state-of-charge of the buffer (the buffer being e.g. a capacitor).

It will be apparent to those skilled in the art how the controller 300 functions. The load voltage, the source voltage, the source current and the buffer voltage are measured, or otherwise determined, in the power converter 110 and supplied as an input to the controller 300. The load voltage 302 is subtracted from the predefined desired load voltage 301 by the summing device 310. The resulting load voltage difference signal 311 is supplied to the first proportional integrator (PI) circuit 320. If the load voltage difference is zero, thus the actual load voltage 302 being equal to the predefined desired load voltage 301, the output of the first PI circuit 320 remains constant. However, if the load voltage difference is non-zero, the output of the first PI circuit 320 changes until the load voltage difference signal 311 represents a zero load voltage difference. The limiting circuit 330 limits the input of the control circuit 340 to lie within a predefined range. The limiting circuit 330 may be omitted, since it only alters the output 321 of the first PI circuit 320 when said output 321 represents an excessive value, which would be due to non-usual circumstances. The control circuit 340 uses the output 331 of the limiting circuit 330 representing a load phase shift $\varphi_{12}$ to control the switches of the power source port bridge of the power converter 110 and the switches of the load port bridge to switch such that the rectangular-pulse-wave voltages on the respective windings of the transformer have the desired phase shift $\varphi_{12}$.

Analogously the power difference signal 351 determined by the second summing device 350 from a predefined desired power 303 and the actual power 304 is supplied to the second PI circuit 360 and the second limiting circuit 370. The resulting limited integrated power difference signal 371 is supplied to the processing unit 380. The processing unit 380 further receives the duty cycle signal 391 from the duty cycle controller 390, which determines the duty cycle $D_3$ in accordance with equation (6) based on the actual buffer voltage 305.

In the exemplary embodiment of Fig. 5, the processing unit 380 is configured to determine a first phase value $\varphi_A$ of a first edge and a second phase value $\varphi_B$ of a second edge of the rectangular-pulse-wave voltage supplied to the respective winding of the transformer in accordance with:

$$\varphi_A = \varphi_{13} + (\pi/2) * D_3; \text{ and}$$

$$\varphi_B = \varphi_{13} + (\pi/2) * (2 - D_3) \qquad\qquad (8)$$

The resulting control signals 381, 382 enable easy operation of the control circuit 340 to control the switches of the power converter bridges such that the rectangular-pulse-wave voltage on the winding coupled to the buffer has the determined buffer phase shift $\varphi_{13}$ and the determined duty cycle $D_3$. However, the limited integrated power difference signal 371 and the duty cycle signal 391 may be supplied to the control circuit 340 directly, if the control circuit 340 is configured to determine correct switching moments from said signals 371, 391.

As mentioned above, the embodiment of Fig. 5 comprises the SOC-controller 400. If the buffer voltage 305 indicating the state-of-charge (SOC) of the buffer comes outside a predefined operating range (e.g. outside the range $[V_{b,min}, 2*V_{b,min}]$) the desired source power 303 may be changed. By changing the desired source power 303, the power converter 110 will be controlled to draw a changed amount of power from the power source. The changed amount of power from the power source enables to charge or discharge the buffer until the state-of-charge is in a preferred range again.

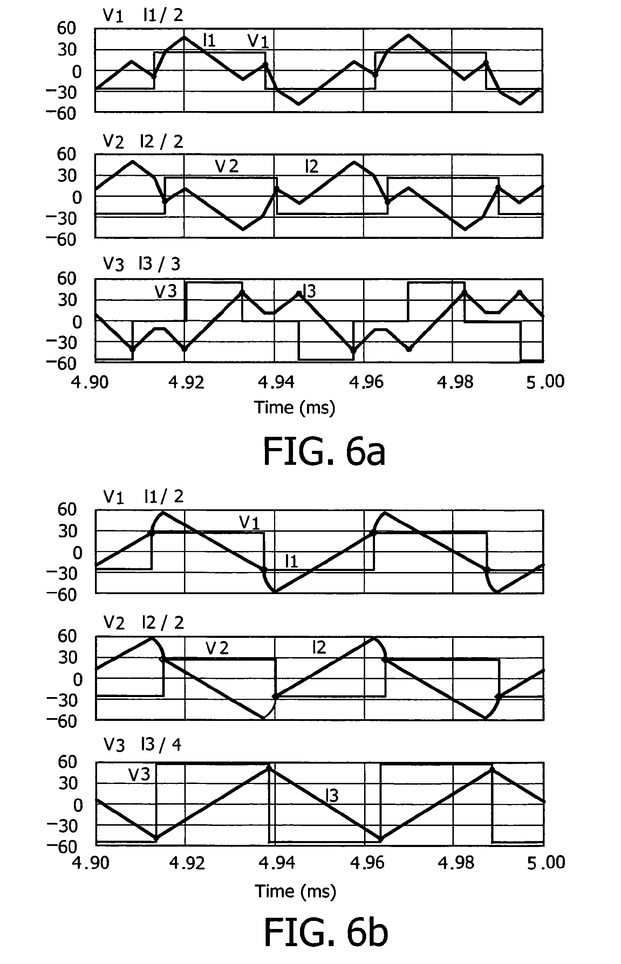

Figs. 6a and 6b show simulation results. In Fig. 6a six graphs are shown. The vertical axis represents a voltage and/or a current; the horizontal axis represents time. A first graph V1 shows a rectangular-pulse-wave voltage on a source winding of a transformer and a second graph I1 shows a corresponding current on said winding. A third and fourth graph V2, I2 represent the rectangular-pulse-wave voltage and the current on a load winding. A fifth and sixth graph V3, I3 represent the rectangular-pulse-wave voltage and the current on a buffer winding. The switching moments indicated by "●" occur at such moments that soft switching is achieved. Fig. 6b shows the similar six graphs V1 - V3, I1 - I3 for operating a power converter without duty cycle control according to the present invention. From Fig. 6b it follows that at the switching moments indicated by "♦" (at the source side and the load side of the power converter) hard switching occurs. Only on the buffer side of the power converter soft switching occurs (indicated by "●"). ♦

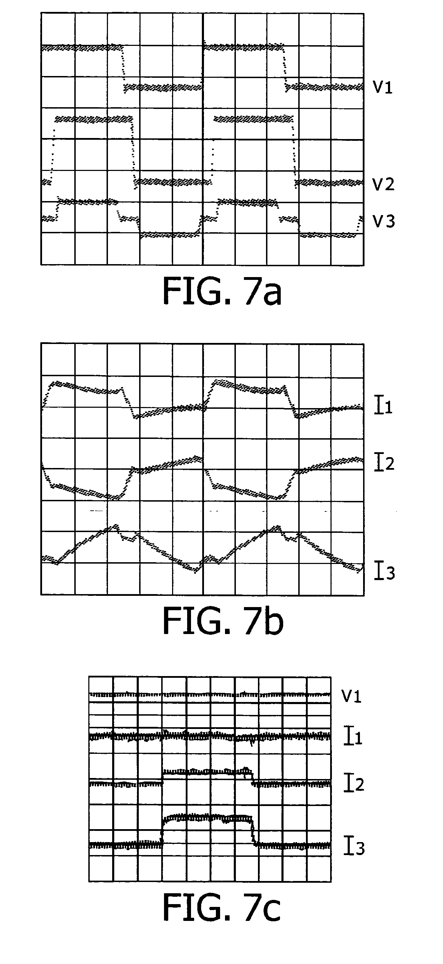

Figs. 7a - 7c show experimental results. Fig. 7a shows three graphs. The vertical axis represents a voltage and the horizontal axis represents time. A first graph V1 represents a source voltage on a winding of a transformer of a triple-active bridge power converter operated according to the present invention. A second graph v2 represents a load voltage on a respective winding of said transformer and a third graph represents a buffer voltage on a respective winding of said transformer. The source voltage V1 and the load voltage V2 are square-wave voltages having a duty cycle 1. The buffer voltage V3 is duty cycle controlled in accordance with the present invention having a duty cycle of about 0.75. The load voltage has a load phase shift of about 0.35 rad with respect to the source voltage V1. The buffer voltage has a buffer phase shift of about 0.17 rad with respect to the source voltage V1.

Fig. 7b shows three graphs. The vertical axis represents a current and the horizontal axis represents time. The shown graphs are the currents corresponding to the respective voltages shown in Fig. 7a. The currents I1 - 13 show that soft switching occurs instead of hard switching. The experimental results thus correspond to the simulation results shown in Figs. 6a.

Fig. 7c shows further experimental results. Four graphs are shown. The vertical axis represents a current and/or a voltage and the horizontal axis represents time.

A first graph V1 represents a load voltage on a winding of a power converter. A second graph I1 represents a source current; a third graph a load current; and a fourth graph a buffer current. As is seen in Fig. 7c, the load voltage V1 is substantially constant in time, while the load current I2 steps to a higher value over a short period of time. Thus, in said short period of time, the power consumed by the load is higher. The source current I1 is substantially constant in time and, since the source voltage is constant, the power drawn from the source is constant in time and thus not influenced by the temporary increase in power consumption by the load. From the fourth graph I3 it may be seen that the additional power consumed by the load is drawn from the buffer.

**Claims**

1.  Method for converting a first DC voltage to a second DC voltage, the method comprising:

    - converting the first DC voltage to a first AC voltage using a first bridge circuit comprising a first number of switches;
    - transforming the first AC voltage to a second AC voltage with a transformer;
    - converting the second AC voltage to the second DC voltage using a second bridge circuit comprising a second number of switches;
    wherein the method further comprises:
    - controlling a phase shift between a phase of the first and the second AC voltage; and
    - controlling a duty cycle of at least one of the first and the second AC voltage such that the switches of said first and second bridge circuits are soft-switched.

2.  Method according to claim 1, wherein the step of transforming further comprises transforming the first AC voltage to a third AC voltage and the method comprising:

    - converting the third AC voltage to a third DC voltage using a third bridge circuit comprising a third number of switches;
    - controlling a phase shift between a phase of the first and the third AC voltage; and
    - controlling a duty cycle of at least one of the first, the second and the third AC voltage such that the switches of said first, second and third bridge circuits are soft-switched.

3. Method according to claim 1 or 2, wherein controlling a duty cycle of at least one AC voltage comprises controlling said duty cycle such that a half-cycle voltage-time integral of said at least one AC voltage equals a half-cycle voltage-time integral of at least one other AC voltage.

4. Method according to claim 1 for operating a DC/DC power converter in a soft-switching range for exchanging power between a number of devices, the number of devices at least comprising a power source and a load, the power converter comprising the transformer, the transformer having at least two windings, and the power converter comprising two bridge circuits and at least two ports, each port being connectable to one of said devices and each being coupled to a respective winding of said transformer through a respective bridge circuit, each bridge circuit comprising a number of controllable switches; the method comprising:

   - generating an AC voltage at each bridge circuit, said AC voltage being applied to the respective winding of the transformer;
   - controlling a phase shift between a phase of each AC voltage on each winding in order to control a power transfer between the devices coupled to the ports; and
   - controlling a duty cycle of at least one AC voltage on a winding to adapt said AC voltage on the winding to a desired voltage on the port coupled to said winding and to adapt said AC voltage on the winding to an AC voltage on at least one other winding.

5. Method according to claim 4, wherein the at least one AC voltage is a rectangular-pulse-wave voltage.

6. Method according to claim 4 or 5, wherein controlling a duty cycle of a voltage on a winding comprises controlling said duty cycle such that a half-cycle voltage-time integral of said voltage on said winding equals a half-cycle voltage-time integral of a voltage on said at least one other winding.

7. Method according to claim 5, wherein the power source has a relatively slow transient response, and the number of devices further comprises a capacitor as an energy buffer, the method comprising:

   - controlling a buffer duty cycle of a voltage on a winding coupled to the capacitor in order to adapt said voltage on the winding to a voltage of the capacitor.

8. Method according to claim 7, wherein the method comprises: determining

   - a load phase shift between a phase of the voltage of the winding coupled to the load and a phase of the voltage of the winding coupled to the power source; and
   - a buffer phase shift between a phase of the voltage of the winding coupled to the capacitor and a phase of the voltage of the winding coupled to the power source; such that the power drawn from the power source is substantially constant;
   - determining the buffer duty cycle of the voltage on the winding coupled to the capacitor such that a half-cycle voltage-time integral of said rectangular-pulse-wave voltage on said winding equals a half-cycle voltage-time integral of a voltage on another winding;
   - controlling the switches of each bridge circuit according to the determined load phase shift, buffer phase shift and buffer duty cycle.

9. Method according to claim 8, the method comprising

   - determining a source duty cycle of a voltage on a winding coupled to the power source such that a half-cycle voltage-time integral of at least a part of said voltage on said winding equals a half-cycle voltage-time integral of at least a part of the voltage on a winding coupled to the load; and
   - controlling the switches of each bridge circuit according to the determined load phase shift, buffer phase shift, buffer duty cycle, and source duty cycle.

10. Method according to claim 8, wherein the step of determining a load phase shift comprises:

   - determining a load voltage difference between a load voltage and a predefined desired load voltage; and
   - determining said load phase shift in response to said load voltage difference.

**11.** Method according to claim 8, wherein the step of determining a buffer phase shift comprises:

- determining a power difference between a power drawn from the power source and a predefined desired source power; and
- determining said buffer phase shift in response to said power difference.

**12.** Method according to claim 11, wherein the predefined desired source power is controlled to change in order to charge or to discharge the capacitor.

**13.** Method according to claim 7, wherein the method comprises a step of starting-up the power converter, the step of starting-up comprising controlling a source duty cycle to gradually increase, while the bridge circuits coupled to the load and the capacitor operate as rectifiers, thereby gradually increasing a power transfer from the power source to the other devices.

**14.** Method according to claim 7, wherein the method comprises a step of starting-up the power converter, the step of starting-up comprising controlling the bridges to operate at a relatively high frequency, thereby enabling a relatively low power transfer.

**15.** DC/DC power converter comprising a transformer, the transformer having at least two windings, and the power converter further comprising at least two bridge circuits and at least two ports, each port being connectable to one of said devices and each being coupled to a respective winding of said transformer through a respective bridge circuit, each bridge circuit comprising a number of controllable switches, each switch being operatively connected to a controller, the controller being configured to control the switches according to the method of any of the preceding claims.

**Patentansprüche**

**1.** Verfahren zur Umwandlung einer ersten Gleichspannung in eine zweite Gleichspannung, wobei das Verfahren die folgenden Schritte umfasst:

- Umwandlung der ersten Gleichspannung in eine erste Wechselspannung unter Einsatz einer ersten Brückenschaltung mit einer ersten Anzahl von Schaltern;
- Transformierung der ersten Wechselspannung auf eine zweite Wechselspannung mit einem Transformator;
- Umwandlung der zweiten Wechselspannung in eine zweite Gleichspannung unter Verwendung einer zweiten Brückenschaltung mit einer zweiten Anzahl von Schaltern;

wobei das Verfahren weiterhin die folgenden Schritte umfasst;

- Steuerung einer Phasenverschiebung zwischen einer Phase der ersten und der zweiten Wechselspannung; sowie
- Steuerung eines Tastverhältnisses von zumindest der ersten oder der zweiten Wechselspannung dahingehend, dass die Schalter der ersten und zweiten Brückenschaltung sanft geschaltet werden.

**2.** Verfahren nach Anspruch 1, wobei der Schritt des Transformierens weiterhin das Transformieren der ersten Wechselspannung auf eine dritte Wechselspannung umfasst und das Verfahren die folgenden Schritte umfasst:

- Umwandlung der dritten Wechselspannung in eine dritte Gleichspannung unter Verwendung einer dritten Brückenschaltung mit einer dritten Anzahl von Schaltern;
- Steuerung einer Phasenverschiebung zwischen einer Phase der ersten und der dritten Wechselspannung; sowie
- Steuerung eines Tastverhältnisses von zumindest der ersten, zweiten oder dritten Wechselspannung dahingehend, dass die Schalter der ersten, zweiten und dritten Brückenschaltung sanft geschaltet werden.

**3.** Verfahren nach Anspruch 1 oder 2, wobei die Steuerung eines Tastverhältnisses von mindestens einer Wechselspannung die Steuerung des Tastverhältnisses dahingehend umfasst, dass ein Halbwellen-Spannungs-/Zeit-Integral der mindestens einen Wechselspannung einem Halbwellen-Spannungs-/Zeit-Integral von mindestens einer weiteren Wechselspannung entspricht.

**4.** Verfahren nach Anspruch 1 zum Betreiben eines Gleichspannungsleistungswandlers in einem sanft schaltenden Bereich, um Energie zwischen einer Anzahl von Einrichtungen zu wechseln, wobei die Anzahl von Einrichtungen zumindest eine Energiequelle und eine Last umfasst,
wobei der Leistungswandler den Transformator umfasst, der Transformator mindestens zwei Wicklungen hat und der Leistungswandler zwei Brückenschaltungen und mindestens zwei Ports umfasst, wobei jeder Port an eine der Einrichtungen anschließbar und jeder durch eine jeweilige Brückenschaltung an eine jeweilige Wicklung des Transformators gekoppelt ist, wobei jede Brückenschaltung eine Anzahl von regelbaren Schaltern umfasst, wobei das Verfahren die folgenden Schritte umfasst:

- Erzeugung einer Wechselspannung an jeder Brückenschaltung, wobei die Wechselspannung an die jeweilige Wicklung des Transformators angelegt wird;
- Steuerung einer Phasenverschiebung zwischen einer Phase jeder Wechselspannung an jeder Wicklung, um eine Energieübertragung zwischen den an die Ports gekoppelten Einrichtungen zu steuern; sowie
- Steuerung eines Tastverhältnisses von mindestens einer Wechselspannung an einer Wicklung, um die Wechselspannung an der Wicklung an eine gewünschte Spannung an dem an die Wicklung gekoppelten Port anzupassen und die Wechselspannung an der Wicklung an eine Wechselspannung an mindestens einer weiteren Wicklung anzupassen.

**5.** Verfahren nach Anspruch 4, wobei die mindestens eine Wechselspannung eine Rechteck-Impuls-Spannung ist.

**6.** Verfahren nach Anspruch 4 oder 5, wobei die Steuerung eines Tastverhältnisses einer Spannung an einer Wicklung die Steuerung des Tastverhältnisses dahingehend umfasst, dass ein Halbwellen-Spannungs-/Zeit-Integral der Spannung an der Wicklung einem Halbwellen-Spannungs-/Zeit-Integral einer Spannung an der mindestens einen weiteren Wicklung entspricht.

**7.** Verfahren nach Anspruch 5, wobei die Energiequelle ein relativ langsames, transientes Verhalten aufweist und die Anzahl von Einrichtungen weiterhin einen Kondensator als einen Energiepuffer umfasst, wobei das Verfahren den Schritt der

- Steuerung eines Puffer-Tastverhältnisses einer Spannung an einer an den Kondensator gekoppelten Wicklung umfasst, um die Spannung an der Wicklung an eine Spannung des Kondensators anzupassen,
umfasst.

**8.** Verfahren nach Anspruch 7, wobei das Verfahren die folgenden Schritte umfasst:
Bestimmung

- einer Last-Phasenverschiebung zwischen einer Phase der Spannung der an die Last gekoppelten Wicklung und einer Phase der Spannung der an die Energiequelle gekoppelten Wicklung; sowie
- einer Puffer-Phasenverschiebung zwischen einer Phase der Spannung der an den Kondensator gekoppelten Wicklung und einer Phase der Spannung der an die Energiequelle gekoppelten Wicklung;
dahingehend, dass die der Energiequelle entnommene Energie im Wesentlichen konstant ist;
- Bestimmung des Puffer-Tastverhältnisses der Spannung an der an den Kondensator gekoppelten Wicklung dahingehend, dass ein Halbwellen-Spannungs-/Zeit-Integral der Rechteck-Impuls-Spannung an der Wicklung einem Halbwellen-Spannungs-/Zeit-Integral einer Spannung an einer weiteren Wicklung entspricht;
- Regelung der Schalter jeder Brückenschaltung gemäß der festgelegten Last-Phasenverschiebung, Puffer-Phasenverschiebung sowie des festgelegten Puffer-Tastverhältnisses.

**9.** Verfahren nach Anspruch 8, wobei das Verfahren die folgenden Schritte umfasst:

- Bestimmung eines Energiequellen-Tastverhältnisses einer Spannung an einer an die Energiequelle gekoppelten Wicklung dahingehend, dass ein Halbwellen-Spannungs-/Zeit-Integral von zumindest einem Teil der Spannung an der Wicklung einem Halbwellen-Spannungs-/Zeit-Integral von zumindest einem Teil der Spannung an einer an die Last gekoppelten Wicklung entspricht; sowie
- Steuerung der Schalter jeder Brückenschaltung gemäß der festgelegten Last-Phasenverschiebung, Puffer-Phasenverschiebung, dem festgelegten Puffer-Tastverhältnis sowie Energiequellen-Tastverhältnis.

**10.** Verfahren nach Anspruch 8, wobei der Schritt des Bestimmens einer Last-Phasenverschiebung die folgenden Schritte umfasst:

- Bestimmung einer Lastspannungsdifferenz zwischen einer Lastspannung und einer vorher definierten, gewünschten Lastspannung; sowie
- Bestimmung der Last-Phasenverschiebung in Reaktion auf die Lastspannungsdifferenz.

**11.** Verfahren nach Anspruch 8, wobei der Schritt des Bestimmens einer Puffer-Phasenverschiebung die folgenden Schritte umfasst:

- Bestimmung einer Leistungsdifferenz zwischen einer der Energiequelle entnommenen Leistung und einer vorher definierten, gewünschten Energiequellenleistung; sowie
- Bestimmung der Puffer-Phasenverschiebung in Reaktion auf die Leistungsdifferenz.

**12.** Verfahren nach Anspruch 11, wobei die vorher definierte, gewünschte Energiequellenleistung so gesteuert wird, dass sie sich verändert, um den Kondensator zu laden oder zu entladen.

**13.** Verfahren nach Anspruch 7, wobei das Verfahren einen Schritt der Inbetriebnahme des Leistungswandlers umfasst, wobei der Schritt der Inbetriebnahme die Steuerung eines Energiequellen-Tastverhältnisses umfasst, damit dieses graduell ansteigt, während die an die Last und den Kondensator gekoppelten Brückenschaltungen als Gleichrichter arbeiten, wodurch eine Energieübertragung von der Energiequelle zu den weiteren Einrichtungen graduell ansteigt.

**14.** Verfahren nach Anspruch 7, wobei das Verfahren einen Schritt der Inbetriebnahme des Leistungswandlers umfasst, wobei der Schritt der Inbetriebnahme die Steuerung der Brücken dahingehend umfasst, dass diese bei einer relativ hohen Frequenz arbeiten, wodurch eine relativ geringe Energieübertragung ermöglicht wird.

**15.** Gleichspannungsleistungswandler mit einem Transformator, wobei der Transformator mindestens zwei Wicklungen hat und der Leistungswandler weiterhin mindestens zwei Brückenschaltungen sowie mindestens zwei Ports aufweist, wobei jeder Port an eine der Einrichtungen anschließbar ist und durch eine jeweilige Brückenschaltung an eine jeweilige Wicklung des Transformators gekoppelt ist, wobei jede Brückenschaltung eine Anzahl von regelbaren Schaltern umfasst, wobei jeder Schalter mit einer Steuereinheit in Wirkverbindung steht, wobei die Steuereinheit so konfiguriert ist, dass sie die Schalter gemäß dem Verfahren nach einem der vorangegangenen Ansprüche steuert.

**Revendications**

**1.** Procédé de conversion d'une première tension CC en une seconde tension CC, le procédé consistant à :

- convertir la première tension CC en une première tension CA en utilisant un premier circuit en pont comprenant un premier nombre d'interrupteurs ;
- transformer la première tension CA en une deuxième tension CA avec un transformateur ;
- convertir la deuxième tension CA en la deuxième tension CC en utilisant un second circuit en pont comprenant un deuxième nombre d'interrupteurs ;

dans lequel le procédé consiste en outre à :

- contrôler un décalage de phase entre une phase de la première et de la deuxième tension CA ; et
- contrôler un cycle de service d'au moins une de la première et de la deuxième tension CA de telle sorte que les interrupteurs desdits premier et deuxième circuits en pont soient commutés en douceur.

**2.** Procédé selon la revendication 1, dans lequel l'étape de transformation consiste en outre à transformer la première tension CA en une troisième tension CA, et le procédé consistant à :

convertir la troisième tension CA en une troisième tension CC en utilisant un troisième circuit en pont comprenant un troisième nombre d'interrupteurs ;
contrôler un décalage de phase entre une phase de la première et de la troisième tension CA ; et
contrôler un cycle de service d'au moins un de la première, de la deuxième et de la troisième tension CA de telle sorte que les interrupteurs desdits premier, deuxième et troisième circuits en pont soient commutés en douceur.

**3.** Procédé selon la revendication 1 ou 2, dans lequel le contrôle d'un cycle de service d'au moins une tension CA

EP 1 894 291 B1

consiste à contrôler ledit cycle de service de telle sorte qu'une intégrale tension-temps de demi-cycle de ladite au moins une tension CA soit égal à une intégrale tension-temps de demi-cycle de l'au moins une autre tension CA.

**4.** Procédé selon la revendication 1 pour actionner un convertisseur de puissance CC/CC dans une plage de commutation douce pour échanger une puissance entre un certain nombre de dispositifs, le nombre de dispositifs comprenant au moins une source d'alimentation et une charge,
le convertisseur de puissance comprenant le transformateur, le transformateur ayant au moins deux enroulements, et le convertisseur de puissance comprenant deux circuits en pont et au moins deux ports, chaque port étant connectable à un desdits dispositifs et chacun étant couplé à un enroulement respectif dudit transformateur par le biais d'un circuit en pont respectif, chaque circuit en pont comprenant un certain nombre d'interrupteurs contrôlables, le procédé consistant à :

- générer une tension CA au niveau de chaque circuit en pont, ladite tension CA étant appliquée à l'enroulement respectif du transformateur,
- contrôler un décalage de phase entre une phase de chaque tension CA sur chaque enroulement afin de contrôler un transfert de puissance entre les dispositifs couplés aux ports ; et
- contrôler un cycle de service d'au moins une tension CA sur un enroulement pour adapter ladite tension CA sur l'enroulement à une tension souhaitée sur le port couplé audit enroulement et pour adapter ladite tension CA sur l'enroulement à une tension CA sur au moins un autre enroulement.

**5.** Procédé selon la revendication 4, dans lequel l'au moins une tension CA est une tension d'onde d'impulsion rectangulaire.

**6.** Procédé selon la revendication 4 ou 5, dans lequel le contrôle d'un cycle de service d'une tension sur un enroulement consiste à contrôler ledit cycle de service de telle sorte qu'au moins une intégrale tension-temps de demi-cycle de ladite tension sur ledit enroulement soit égal à une intégrale tension-temps de demi-cycle d'une tension sur ledit au moins un autre enroulement.

**7.** Procédé selon la revendication 5, dans lequel la source d'alimentation a une réponse transitoire relativement lente, et le nombre de dispositifs comprend en outre un condensateur comme tampon d'énergie, le procédé consistant à :

contrôler un cycle de service tampon d'une tension sur un enroulement couplé au condensateur afin d'adapter ladite tension sur l'enroulement à une tension du condensateur.

**8.** Procédé selon la revendication 7, dans lequel le procédé consiste à :
déterminer

- un décalage de phase de charge entre une phase de la tension de l'enroulement couplé à la charge et une phase de la tension de l'enroulement couplé à la source d'alimentation ; et
- un décalage de phase tampon entre une phase de la tension de l'enroulement couplé au condensateur et une phase de la tension de l'enroulement couplé à la source d'alimentation ; de telle sorte que la puissance extraite de la source d'alimentation soit sensiblement constante ;
- déterminer le cycle de service tampon de la tension sur l'enroulement couplé au condensateur de telle sorte qu'une intégrale tension-temps de demi-cycle de ladite tension d'onde d'impulsion rectangulaire sur ledit enroulement soit égal à une intégrale tension-temps de demi-cycle d'une tension sur un autre enroulement ;
- contrôler les interrupteurs de chaque circuit en pont selon le décalage de phase de charge, le décalage de phase tampon et le cycle de service tampon déterminés.

**9.** Procédé selon la revendication 8, le procédé consistant à :

- déterminer un cycle de service source d'une tension sur un enroulement couplé à la source d'alimentation de telle sorte qu'une intégrale tension-temps de demi-cycle d'au moins une partie de ladite tension sur ledit enroulement soit égal à une intégrale tension-temps de demi-cycle d'au moins une partie de la tension sur un enroulement couplé à la charge ; et
- contrôler les interrupteurs de chaque circuit en pont selon le décalage de phase de charge, le décalage de phase tampon, le cycle de service tampon et le cycle de service source prédéterminés.

**10.** Procédé selon la revendication 8, dans lequel l'étape de détermination du décalage de phase de charge consiste à :

- déterminer une différence de tension de charge entre une tension de charge et une tension de charge souhaitée prédéfinie ; et
- déterminer ledit décalage de phase de charge en réponse à ladite différence de tension de charge.

**11.** Procédé selon la revendication 8, dans lequel l'étape de détermination d'un décalage de phase tampon consiste à :

- déterminer une différence de puissance entre une puissance extraite de la source d'alimentation et une puissance source souhaitée prédéfinie ; et
- déterminer ledit décalage de phase tampon en réponse à ladite différence de puissance.

**12.** Procédé selon la revendication 11, dans lequel le changement de la puissance source souhaitée prédéfinie est contrôlé afin de charger ou de décharger le condensateur.

**13.** Procédé selon la revendication 7, dans lequel le procédé comprend une étape de démarrage du convertisseur de puissance, l'étape de démarrage consistant à contrôler l'augmentation progressive d'un cycle de service source, alors que les circuits en pont couplés à la charge et au condensateur fonctionnent comme des redresseurs, augmentant ainsi progressivement un transfert de puissance de la source d'alimentation vers les autres dispositifs.

**14.** Procédé selon la revendication 7, dans lequel le procédé comprend une étape consistant à démarrer le convertisseur de puissance, l'étape de démarrage consistant à contrôler le fonctionnement des ponts à une fréquence relativement élevée, permettant ainsi un transfert de puissance relativement faible.

**15.** Convertisseur de puissance CC/CC comprenant un transformateur, le transformateur ayant au moins deux enroulements, et le convertisseur de puissance comprenant en outre au moins deux circuits en pont et au moins deux portes, chaque porte étant connectable à un desdits dispositifs et chacune étant couplée à un enroulement respectif dudit transformateur par le biais d'un circuit en pont respectif, chaque circuit en pont comprenant un certain nombre d'interrupteurs commutables, chaque interrupteur étant connecté opérationnellement à un contrôleur, le contrôleur étant configuré pour contrôler les interrupteurs selon le procédé de l'une quelconque des revendications précédentes.

# FIG. 1

# FIG. 2

FIG. 3

FIG. 4

FIG. 5

FIG. 6a

FIG. 6b

FIG. 7a

FIG. 7b

FIG. 7c

**REFERENCES CITED IN THE DESCRIPTION**

**Patent documents cited in the description**

- WO 03065559 A
- US 5027264 A